Europäisches Patentamt

European Patent Office

Office européen des brevets

(11) Publication number: **0 557 570 A1**

# EUROPEAN PATENT APPLICATION

(21) Application number: **92108978.5**

(22) Date of filing: **27.05.92**

(51) Int. Cl.⁵: **B66D 5/30**, H02P 7/00

(30) Priority: **27.02.92 US 842427**

(43) Date of publication of application:
**01.09.93 Bulletin 93/35**

(84) Designated Contracting States:
**BE DE ES FR GB IT SE**

(71) Applicant: **ELECTROMOTIVE SYSTEMS, Inc.**
**3650 North 126th Street**
**Brookfield, Wisconsin 53005(US)**

(72) Inventor: **Jurkowski, Keith O.**

309 South University Drive
Waukesha, Wisconsin 53188(US)
Inventor: Neidenger, Joseph L.
N2 W31731 Twin Oaks Drive
Delafield, Wisconsin 53018(US)

(74) Representative: **Herrmann-Trentepohl,**
**Werner, Dipl.-Ing. et al**
**Herrmann-Trentepohl, Kirschner, Grosse,**
**Bockhorni & Partner Forstenrieder Allee 59**
**D-81476 München (DE)**

(54) **Brake-actuating watchdog system for use with a microprocessor-based motor control.**

(57) A brake-actuating arrangement (44) for a system which includes a microprocessor-based motor controller (18) and a brake (16), such as a hoist system (10), actuates the brake (16) in the event the microprocessor (32) ceases operation for a predetermined period of time. The arrangement (44) includes a device (50) which monitors operation of the microprocessor, and an actuator arrangement (48) interconnected between the brake (16) and the monitoring device (50). Input signals are provided to the monitoring device (50) during normal operation of the microprocessor, which provides an output which positions the actuator arrangement (48) so as to allow normal operation of the brake (16). In the event input signals are not received by the monitoring device (50) from the microprocessor for a predetermined period of time, the monitoring device (50) moves the brake-actuator arrangement (48) to a position in which the brake (16) is set in the event the microprocessor or its associated clock fails for any reason.

FIG.I

EP 0 557 570 A1

## BACKGROUND AND SUMMARY

This invention pertains to a safety device, and more particularly to a safety device for use in connection with a system including a brake and a motor, in which the motor is controlled by a microprocessor-based motor controller.

Many industrial and factory automation systems utilize a motor controlled by a microprocessor-based motor controller, in combination with a brake. One such system is a hoist for lifting, lowering or suspending a load.

In a typical hoist system, a microprocessor-based motor control, such as an adjustable frequency drive, is interconnected with the motor for controlling the direction and speed of operation of the motor. The controller further includes a brake control relay, and the controller is typically interconnected with a manually operated control for setting the brake, through the brake control relay, when it is desired to suspend the load or stop the load from being lifted or lowered. The relay controls the supply of power to the brake and, depending on construction of the brake, the brake is applied either when power to the brake is cut off or when power to the brake is supplied.

It is an object of the present invention to provide a system for interposition between a brake and its power supply, and interconnected with the microprocessor associated with the motor controller, for detecting when the microprocessor ceases operation for a predetermined period of time, to automatically actuate the brake in response thereto. It is a further object of the invention to incorporate such a system into a hoist, in order to ensure that the load being lifted, lowered or suspended by the hoist does not fall in the event the microprocessor ceases operation. It is a further object of the invention to provide such a system which is relatively simple in its construction and installation, allowing it to be easily incorporated into a hoist system or the like.

In accordance with the invention, a brake actuating arrangement for use in a system including a motor and a brake, in which the motor is controlled by a motor controller including a microprocessor, includes a monitoring device and an actuator arrangement interconnected between the brake and the monitoring device. The monitoring device is interconnected with the microprocessor for monitoring its operation, and for detecting when the microprocessor has ceased operation for a predetermined period of time. The actuator arrangement is operable to actuate the brake, in response to detection by the monitoring device that the microprocessor has ceased operation for the predetermined period of time. The monitoring device may take the form of a retriggerable monostable multivibrator, interconnected with the microprocessor such that a signal is provided to the multivibrator when the microprocessor is operating. The multivibrator provides a first output in the form of electrical power when the microprocessor is operating, and the actuator arrangement is preferably in the form of a relay interconnected with the power supply to the brake. A second power supply is interconnected with the relay for providing power thereto independently of the multivibrator. The actuator arrangement is in series with the brake power supply, and the first and second power supplies maintain the relay in a closed position during operation of the microprocessor to provide operator-controlled operation of the brake. When the microprocessor ceases operation for a predetermined period of time, the multivibrator cuts off the second power supply to the relay, which causes it to move to an open position. This cuts off the supply of power to the brake and the brake is set, in that it is constructed so as to be actuated when the supply of power thereto is cut off. The multivibrator preferably provides a second output in the form of electrical power when the signal from the microprocessor, indicative of its operation, is not supplied to the multivibrator microprocessor. Visual indicators, such as LEDs, are provided to indicate whether power is being supplied to the relay, or whether such power has been cut off and the second output power is emanating from the multivibrator.

The invention further contemplates incorporation of the system as summarized above into a hoist arrangement.

The invention further contemplates a method of actuating a brake in a system including a motor and a brake, in which the motor is controlled by a motor controller including a microprocessor. The method is carried out by monitoring operation of the microprocessor, and actuating the brake in the event the microprocessor ceases operation, substantially in the same manner as summarized above.

Various other features, objects and advantages of the invention will be made apparent from the following description taken together with the drawings.

## BRIEF DESCRIPTION OF THE DRAWINGS

The drawings illustrate the best mode presently contemplated of carrying out the invention.

In the drawings:

Fig. 1 is a schematic view of a hoist system employing a microprocessor-based motor controller incorporating the automatic brake-actuating system of the invention; and

Fig. 2 is a detailed electronic schematic of the brake-actuating system incorporated into the hoist system of Fig. 1.

DETAILED DESCRIPTION OF THE PREFERRED EMBODIMENT

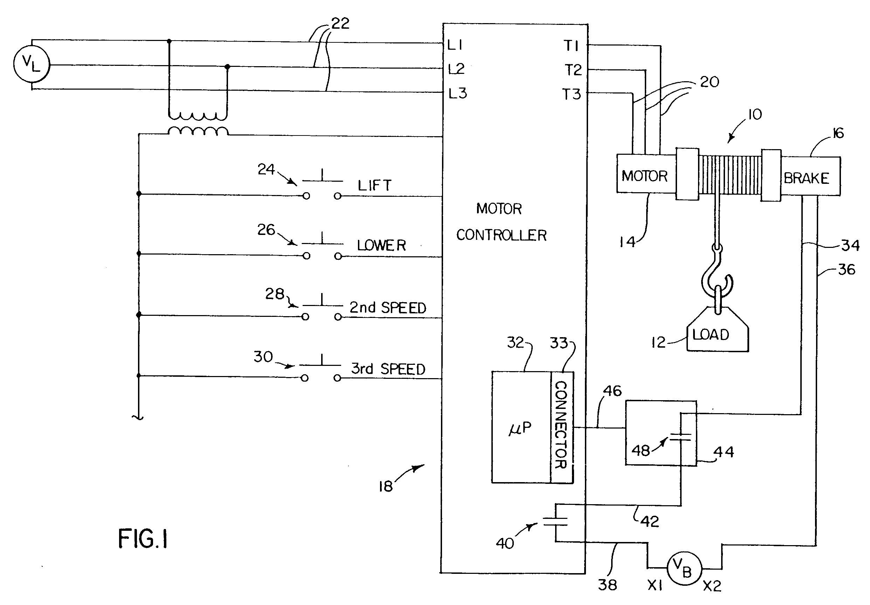

Fig. 1 generally illustrates a hoist system including a hoist 10 from which a load 12 is suspended. A motor 14 is drivingly connected with hoist 10, and is operable to lift or lower load 12 by rotating hoist 10 in either a clockwise or counterclockwise direction. A brake 16 is connected to hoist 10, for stopping the rotation of hoist 10 during lifting or lowering of load 12, and for suspending load 12 by maintaining hoist 10 against rotation. These components are schematically illustrated in Fig. 1, but the details of construction and operation thereof are known by persons of ordinary skill in the art.

A motor controller 18 is interconnected with motor 14 by means of a series of lines 20 which provide control power from line voltage source $V_L$ to motor 14.

Motor controller 18 may be that such as is manufactured by Electromotive Systems, Inc. of Milwaukee, Wisconsin under its designation "Impulse G + ", which is an adjustable frequency drive providing output control power through lines 20 to motor 14. In a manner as is known, line power is supplied to controller 18 through a series of lines 22, and a series of operator-actuated switches 24, 26, 28 and 30 are interconnected with controller 18 for controlling the direction and speed of operation of motor 14 through controller 18. The details and operation of lines 22 and switches 24-30 are apparent to one of ordinary skill in the art, and are not pertinent to the present invention.

Motor controller 18 includes a microprocessor 32. Microprocessor 32 is incorporated into a drive such as is available from Yaskawa Electric Mfg. Co. Ltd. of Tokyo, Japan in its G3 series of products, and may be such as manufactured by Intel Corporation under its part no. N8097. In the G3 series drives available from Yaskawa Electric Mfg. Co. Ltd., microprocessor 32 is mounted to a board and is interconnected with a 32-pin connector 33 in a manner as is known, for example a 3CN connector.

Microprocessor 32 can be programmed to suit the needs of a particular user of hoist 10, in a manner as is explained in the instruction manual for motor controller 18 manufactured and sold by Electromotive Systems, Inc. under its designation "Impulse G + ".

Power is supplied to hoist brake 16 through a pair of lines 34, 36 which originate with a brake power supply $V_B$ at terminals X1, X2. Line 36 extends between brake 16 and terminal X2. Line 34 is interconnected with terminal X1 through a line 38, a brake control relay 40 associated with motor controller 18, and a line 42 which extends between brake control relay 40 and a brake-actuating watchdog device 44, constructed according to the invention. Watchdog device 44 is interconnected with microprocessor 32 of motor controller 18 by means of a line 46, and includes a relay 48, as will be explained.

In a manner as is known, hoist brake 16 is of the type which is set, or actuated, when the supply of power from brake power supply $V_B$ is cut off, which can occur either when brake control relay 40 is opened or when relay 48 of watchdog device 44 is opened. When power is supplied to brake from the brake power supply $V_B$, brake 16 is disengaged.

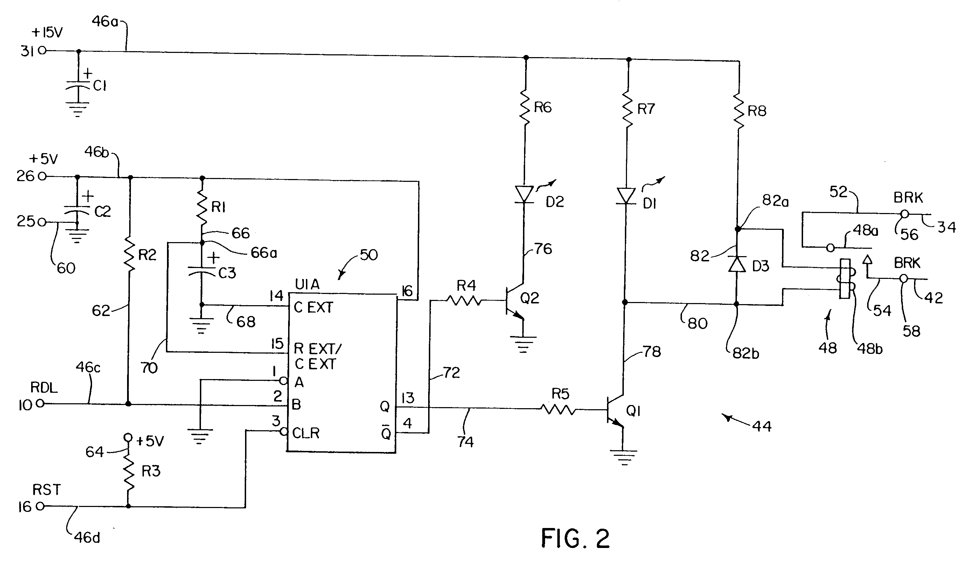

Reference is now made to Fig. 2 for a detailed explanation of the components and operation of brake-actuating watchdog device 44. Manufacturer-assigned pin number designations are shown for the integrated circuit components, to facilitate understanding.

As shown in Fig. 2, brake-actuating watchdog device 44 broadly includes a monitoring device in the form of a retriggerable monostable multivibrator (U1A) 50, which is interconnected between microprocessor 32 and relay 48, for controlling the position of relay 48 in response to operation, or lack of operation, of microprocessor 32. Relay 48 is interconnected with lines 34 and 42 of the brake power supply circuit by a pair of lines 52, 54, respectively, and terminals 56, 58, respectively. Relay 48 is a normally open relay, and may be that such as manufactured by Omron under its part no. G5C-1-12.

Retriggerable monostable multivibrator 50 may be that such as is available under the generic part number 74HC123A. The operation of multivibrator 50 will later be explained in greater detail.

A line 46a provides + 15V DC power to watchdog device 44 from pin 31 of 32-pin connector 33 interposed between motor controller microprocessor 32 and watchdog device 44. A noise filter capacitor C1 is connected between line 46a and ground for removing undesirable ripples from the DC power supplied on line 46a. Similarly, + 5V DC power is supplied to pin 16 of multivibrator 50 to power multivibrator 50, through a line 46b from pin 26 of connector 33, and a noise filtering capacitor C2 is interconnected between line 46b and ground.

Ground potential is supplied from pin 25 of connector 33 through a line 60, to supply ground potential to the various locations shown on Fig. 2.

An address line 46c is interconnected with pin 10 of connector 33 to provide an input signal at pin 2 of multivibrator 50. Briefly, and as will be explained in greater detail, the presence of a signal on line 46c indicates operation of microprocessor 32, whereas the absence of a signal on line 46c provides an indication that microprocessor 32 has ceased operation.

A reset line 46d is interconnected with pin 16 of connector 33 for providing a reset signal to pin 3 of the multivibrator 50.

A resistor R2 is provided in a line 62 connected between address line 46c and +5V power line 46b, to provide clean input signals to multivibrator 50 from line 46c, in a manner as is known. Similarly, a resistor R3 is provided in a line 64 interconnected between reset line 46d and +5V power line 46b, for accomplishing the same purpose with the reset signals input to the multivibrator.

A resistor R1 and a capacitor C3 are provided in a line 66 connected between +5V power line 46b and a line 68, which provides an input signal at pin 14 of multivibrator 50. A line 70 is connected to line 66 at node 66 between resistor R1 and capacitor C3, for providing an input signal at pin 15 of multivibrator 50. The RC timing characteristic afforded by R1 and C3 provides input signals at pins 14 and 15 of multivibrator 50 which set an acceptable time reference for multivibrator 50, for purposes to be explained.

To the right of multivibrator 50, a line 72 is interconnected between pin 4 of multivibrator 50 and the base of transistor Q2, and a line 74 is interconnected between output pin 13 of multivibrator 50 and the base of transistor Q1. A resistor R4 is in line 72 for limiting the input current to the base of transistor Q2, and a resistor R5 is in line 74 for limiting the current supplied to the base of transistor Q1. A line 76 is interconnected between the collector of transistor Q2 and input +15V DC power line 46a and in series with a red light emitting diode D2 and a resistor R6. Similarly, a line 78 interconnects the collector of transistor Q1 with input +15V DC power line 46a, in series with a green light emitting diode D1 and a resistor R7. Resistors R6, R7 act to limit the input current supplied to light emitting diodes D2, D1, respectively.

Line 46a provides +15V DC power through a resistor R8 to one side of relay 48 at node 82a. A line 80 is interconnected between line 78 and the other side of relay 48 at node 82b. A diode D3 is connected between nodes 82a and 82b.

Transistors Q1 and Q2 are generic part nos. 2N3904, and the values of the resistors and capacitors in the circuit are illustratively as set forth below.

| Component | Value |
|---|---|
| C1 | 2.2 microfarads |
| C2 | 1.0 microfarads |
| C3 | 1.0 microfarads |
| R1 | 100Kohms |
| R2 | 15Kohms |
| R3 | 15Kohms |
| R4 | 10Kohms |
| R5 | 10Kohms |
| R6 | 1Kohm |
| R7 | 1Kohm |
| R8 | 360ohms |

In a manner as is known, the components of Fig. 2 are incorporated into a circuit board having a 32-pin connector which interfaces with the connector with which microprocessor 32 is connected, and is installed in the system of Fig. 1 as an option into motor controller 18.

In operation, the circuit of Fig. 2 functions as follows:

As noted previously, input +15V DC power is provided through line 46a and resistor R8 to one side of relay 48 at node 82a, with resistor R8 acting to reduce the input voltage to relay 48 from 15 volts to 12 volts, which is the rated coil operating voltage of relay 48.

Input +5V DC power is provided to multivibrator 50 through line 46b to its pin 16, for powering multivibrator 50. During normal operation of microprocessor 32, microprocessor 32 constantly reads instructions from its memory, and executes such instructions one at a time. This activity occurs on the microprocessor address bus, and address line 46c is interconnected with the microprocessor address bus at connector pin 10. Line 46c transfers such signals generated during the fetch cycle of microprocessor 32 to input pin 2 of multivibrator 50, which simply provide to pin 2 signals which indicate that microprocessor 32 is operating. In the event that microprocessor 32 ceases operation for any reason whatsoever, such as a failure of microprocessor 32 or its associated clock, there will be no signals on line 46c, and thus no input at pin 2 of multivibrator 50.

As noted previously, the signals input at pins 14 and 15 of multivibrator 50 from the R1/C3 timing combination are utilized by multivibrator 50 in establishing the acceptable time limit within which a signal must be provided on address line 46c from microprocessor 32. Illustratively, such a time limit may be 0.10 second. Multivibrator 50 functions in accordance with known operation to determine whether a signal is received from address read control line 46c at pin 2 within the predetermined period of time established by the R1/C3 reference timing combination. As long as the logic on line 46c is changing within such predetermined time period, multivibrator 50 is automatically reset before it times out, and provides a high state at Q output pin 13, which triggers transistor Q1 into conduction to complete a circuit from line 46a through resistor R8 to node 82a through relay 48 to node 82b through line 80 through line 78 through transistor R1 to ground, to provide power to relay 48. This supply of power to relay 48 maintains relay 48 in its closed position with switch arm 48a magnetically attracted downwardly by energized relay coil 48b, to complete a circuit between lines 52 and 54 and brake power lines 34 and 42. Brake 16 can thus be controlled normally, such as by the operator and by motor controller 18, by moving brake control relay 40 between its opened and closed positions. As noted previously, when relay 48 is closed and brake control relay 40 is closed, brake 16 is released. In the event brake control relay 40 is opened, brake 16 is applied during normal operation.

In the event microprocessor 32 ceases operation or malfunctions, the logic level fluctuations on address read control line 46c will either cease or slow down. When this occurs, and when the logic signals do not change within the predetermined time period established by the R1/C3 timing combination, and multivibrator 50 outputs a low state at Q output pin 13 and a high state at $\overline{Q}$ output pin 4. Transistor Q1 turns off in response to the low state on line 74 from pin 13, cutting off the supply of to relay 48. This causes relay 48 to move to its open position, as is shown in Fig. 2, thus breaking contact between lines 52 and 54, and thereby between brake power lines 34 and 42. When this occurs, input power through line 34 to brake 16 is cut off, and brake 16 thus is set to prevent further rotation of hoist 10, prevent load 12 from falling, which may otherwise possibly occur in the event microprocessor 32 or its associated clock were to fail. The high state on line 72 from pin 4 triggers Q2 into conduction.

During normal operation, Q output pin 13 and line 74 are high, and transistor Q1 is conductive and completes the circuit above-described, to supply power to relay 48. Conductive transistor Q1 also completes a circuit from line 46a through limiting resistor R7 through green light emitting diode D1 through transistor Q1 to ground. The green light from D1 provides an indication that microprocessor 32 is functioning properly. When $\overline{Q}$ output pin 4 and line 72 are high, transistor Q2 is conductive and completes a circuit from line 46a through limiting resistor R6 through red light emitting diode D2 through transistor Q2 to ground. The red light from D2 indicates a fault condition for microprocessor 32.

Diode D3, which is a 1N148 diode, functions as a kickback diode to dissipate energy from relay 48 when it is moved to its open position, to protect multivibrator 50.

At startup of the watchdog device 44, the multivibrator 50 is in its fault-indicating condition. The reset signal provided on line 46d from microprocessor 32 to pin 3 of multivibrator 50 acts to reset multivibrator 50 to its monitoring condition.

Various alternatives and embodiments are contemplated as being within the scope of the following claims particularly pointing out and distinctly claiming the subject matter regarded as the invention.

## Claims

1.  A brake-actuating arrangement for use in a system including a motor and a brake, in which the motor is controlled by a motor controller including a microprocessor, comprising:
    a monitoring device for monitoring operation of the microprocessor and for detecting when the microprocessor ceases operation for a predetermined period of time; and
    an actuator arrangement interconnected between the brake and the monitoring device for actuating the brake in response to detection by the monitoring device that the microprocessor has ceased operation for the predetermined period of time.

2.  The arrangement of claim 1, wherein the monitoring device provides a first output when the microprocessor is operating.

5

3. The arrangement of claim 2, wherein the actuator arrangement comprises a relay interconnected with a power supply to the brake.

4. The arrangement of claim 3, wherein power supply to the relay is controlled by the first output from the monitoring device, and wherein power is supplied to the relay from a power supply independent of the monitoring device.

5. The arrangement of claim 4, wherein the power supply to the relay maintains the relay in a closed position in response to the first output during operation of the microprocessor to provide operator-controlled operation of the brake, and wherein the monitoring device, in response to detecting that the microprocessor has ceased operation for the predetermined period of time, is operable to move the relay to an open position to thereby cut off the supply of power to the brake, wherein the brake is actuated when the supply of power thereto is cut off.

6. The arrangement of claim 5, wherein the monitoring device is interconnected with a first transistor responsive to the first output and interconnected with the relay, wherein the relay is triggered by the first output to provide power to the relay.

7. The arrangement of claim 2, wherein the monitoring device provides a second output when the microprocessor ceases operation for the predetermined period of time.

8. The arrangement of claim 7, further comprising a first indicator responsive to the first output to indicate that the microprocessor is operating, and a second indicator responsive to the second output to indicate that the microprocessor has ceased operation for the predetermined period of time.

9. The arrangement of claim 1, wherein the monitoring device comprises a retriggerable monostable multivibrator interconnected with the microprocessor by means of a line which provides signals to the multivibrator indicative of operation of the microprocessor.

10. The arrangement of claim 1, wherein the system comprises a hoist assembly for lifting and lowering a load, and wherein actuation of the brake prevents the load from falling in the event the microprocessor ceases operation for the predetermined period of time.

11. A hoist arrangement, comprising:
   a hoist for lifting, lowering or suspending a load;
   a motor drivingly interconnected with the hoist;
   a controller interconnected with the motor for controlling operation of the motor, the controller including a microprocessor;
   a selectively actuable brake operatively associated with the hoist; and
   a brake-actuating arrangement, comprising a monitoring device for monitoring operation of the microprocessor and for detecting when the microprocessor ceases operation for a predetermined period of time; and an actuator arrangement interconnected between the brake and the monitoring device for actuating the brake in response to detection by the monitoring device that the microprocessor has ceased operation for the predetermined period of time.

12. A method of actuating a brake in a system including a motor and a brake, in which the motor is controlled by a motor controller including a microprocessor, comprising the steps of:
   monitoring operation of the microprocessor; and
   setting the brake in the event the microprocessor ceases operation for a predetermined period of time.

13. The method of claim 12, wherein the step of monitoring operation of the microprocessor comprises interconnecting a monitoring device with the microprocessor, and wherein the step of setting the brake is carried out responsive to the monitoring device.

14. The method of claim 13, wherein the step of setting the brake is carried out by operation of a brake-actuating mechanism interconnected between the monitoring device and the brake.

**15.** The method of claim 14, wherein the brake actuating mechanism includes a relay interconnected with a power supply to the brake for controlling the supply of power to the brake.

**16.** The method of claim 15, wherein the step of setting the brake is carried out by moving the relay to its open position responsive to the monitoring device to cut off the supply of power to the brake.

**17.** The method of claim 16, wherein power is supplied to the relay from a first power supply independent of the monitoring device, and wherein the step of setting the brake is carried out by the monitoring device cutting off the power supply to the relay when the microprocessor ceases operation for the predetermined period of time, to move the relay to its open position.

**18.** The method of claim 11, wherein the step of monitoring operation of the microprocessor comprises interconnecting the monitoring device with the microprocessor such that the monitoring device receives signals from the microprocessor indicative of operation of the microprocessor.

**19.** The method of claim 18, wherein the step of interconnecting the monitoring device with the microprocessor comprises interconnecting a retriggerable monostable multivibrator with the microprocessor.

FIG.1

FIG. 2

EP 0 557 570 A1

European Patent Office

# EUROPEAN SEARCH REPORT

Application Number

EP    92 10 8978

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | GB-A-2 153 465 (HITACHI  LTD.) | 1-5,7, 10,11 | B66D5/30 H02P7/00 |
| A | * abstract; figures 8-10,12 * <br> * page 6, line 8 - line 16 * | 9,12 | |
| Y | EP-A-0 395 829 (ROCKWELL  INTERNATIONAL CORPORATION) | 1-5,7, 10,11 | |
| A | * column 4, line 20 - line 27 * <br> * column 4, line 41 - line 47 * <br> * column 5, line 9 - line 30 * <br> * figures * | 12 | |
| Y | GB-A-2 241 123 (A. TEVES  G.M.B.H.) | 1-5,7, 10,11 | |
| A | * abstract; figures * <br> * page 6, line 14 - line 24 * <br> * page 7, line 23 - page 8, line 36 * | 6,12 | |
| A | EP-A-0 471 951 (AISIN  SEIKI  K.K.) <br> * column 3, line 24 - column 4, line 34 * <br> * figure 2 * | 1,12 | |
| A | GB-A-2 127 507 (A. TEVES  G.M.B.H.) <br> * abstract; figures * | 1,12 | TECHNICAL FIELDS SEARCHED (Int. Cl.5 ) <br><br> B66D <br> H02P |
| A | WO-A-9 003 602 (ALLIED - SIGNAL   INC.) <br> * abstract; figure 1 * | 1 | B60T <br> B66B <br> G05B |
| A | DE-C-3 428 215 (SIEMENS  A.G.) <br> * column 2, line 18 - line 34 * <br> * figure * | 1,11 | |
| A | GB-A-2 226 292 (HITACHI  LTD.) | | |
| A | EP-A-0 323 889 (LUCAS  INDUSTRIES) | | |
| A | US-A-4 246 566 (ENDO   ET  AL.) | | |

The present search report has been drawn up for all claims

| Place of search | Date of completion of the search | Examiner |
|---|---|---|
| THE HAGUE | 26 MAY 1993 | GUTHMULLER J.A. |